# EUROPEAN PATENT APPLICATION

(11) **EP 4 800 237 A1**
(43) Date of publication of application: **02.09.2026**
(21) Application number: 25195554.8
(22) Date of filing: 12.08.2025
(51) Int. Cl.: F03B 13/18, F03B 13/20

(54) **SPLIT-TYPE INERTIAL KINETIC ENERGY OSCILLATION SYSTEM**

(30) Priority: 27.02.2025 CN 202510227593
(71) Applicant: Y J RENEWABLE ENERGY TECHNOLOGY COMPANY LIMITED, Doncaster DN6 8DA (GB)
(72) Inventor: CAO, Yue, Shanghai (CN); LIU, Zhong, Shanghai (CN)
(74) Representative: Freiherr von Ende, Philip

(57) **Abstract**

The present invention relates to a split-type inertial kinetic energy oscillation system comprising a housing (1) with an upper chamber (22) and a lower chamber (20), the diameter of the lower chamber (20) is smaller than the diameter of the upper chamber (22); an inertial kinetic energy body (2) sliding in the vertical direction in the lower chamber for oscillating up and down to generate inertial kinetic energy, a suspension support system (3) for supporting the oscillating inertial kinetic energy body (2); a mounting structure (23) in the upper chamber (22), a transmission portion of a transmission mechanism passes through the mounting structure (23) and enters the lower chamber (20) to be connected to the inertial kinetic energy body (2), the transmission mechanism is capable of converting bidirectional reciprocating oscillation kinetic energy of the inertial kinetic energy body (2) into continuous torque outputted in one direction.

## Description

### TECHNICAL FIELD

The present invention belongs to the field of kinetic energy oscillation systems, and specifically relates to a split-type inertial kinetic energy oscillation system.

### BACKGROUND

With the global energy demand increasing day by day, ocean wave energy, as renewable energy, has received widespread attention. The capture and conversion of wave energy has become an important direction in sustainable energy development. However, offshore wave energy power generation systems face many technical challenges in practical applications, particularly how to cope with extreme weather conditions (such as typhoons and giant swells) in harsh offshore environments, and how to maintain device stability and high energy conversion efficiency.

Traditional offshore wave energy capture systems mostly suffer from issues such as a high center of gravity and unstable floating. Especially when faced with intense wave surges and external impacts, devices easily tilt or capsize, thereby affecting the normal operation thereof and the efficiency of wave energy capture. In addition, transmission mechanisms and energy capture methods of existing systems are often complex, difficult to maintain, and unable to effectively adapt to dynamic changes in different sea conditions.

The present invention is proposed in view of this.

### SUMMARY

The technical problem to be solved by the present invention is to overcome deficiencies of the prior art and provide a split-type inertial kinetic energy oscillation system, which solves the problems raised in the background.

In order to solve the above technical problem, the basic concept of the technical solution adopted by the present invention is as follows:

A split-type inertial kinetic energy oscillation system, comprising:
a housing, wherein the housing has an upper chamber and a lower chamber, and the diameter of the lower chamber is smaller than the diameter of the upper chamber;
an inertial kinetic energy body, wherein the inertial kinetic energy body slides in the vertical direction in the lower chamber of the housing, and is capable of oscillating up and down driven by pushing by undulations of ocean waves to generate inertial kinetic energy, a suspension support system is provided below the inertial kinetic energy body and is arranged in the lower chamber, and the suspension support system is configured to support the oscillating inertial kinetic energy body; and
a mounting structure, wherein the mounting structure is located in the upper chamber, a transmission mechanism is provided above the mounting structure, a transmission portion of the transmission mechanism passes through the mounting structure and enters the lower chamber to be connected to the inertial kinetic energy body, and the transmission mechanism is capable of converting bidirectional reciprocating oscillation kinetic energy of the inertial kinetic energy body into continuous torque outputted in one direction.

Optionally, the suspension support system has an elastic structure, the elastic structure is in an elastic energy storage state, and an elastic force provided by the elastic structure is used directly or indirectly as a support force for supporting the oscillating suspended body.

Optionally, the transmission mechanism comprises a mounting plate, an energy storage balancing flywheel, a double-sided rack, and torque conversion gear sets located above the transmission structure, the torque conversion gear sets are mounted on one side of the mounting plate, the energy storage balancing flywheel rotates inside the upper chamber, one end of the rack is fixed to the inertial kinetic energy body, the double-sided rack respectively meshes with two torque conversion gear sets, and an output end of the torque conversion gear set mates with the energy storage balancing flywheel.

Optionally, torque conversion gear sets comprise a first transmission shaft, a second transmission shaft, a third transmission shaft, and a fourth transmission shaft that are respectively rotatably connected to four corners of a mounting plate, two first gears are fixedly connected to peripheral sides of each of the first transmission shaft and the second transmission shaft, a second gear located between the two first gears is further fixedly connected to the peripheral sides of each of the first transmission shaft and the second transmission shaft, a rack is located between the two second gears and meshes with the two second gears, two adjacent first gears mesh with each other, two third gears are rotatably connected to peripheral sides of each of the third transmission shaft and the fourth transmission shaft, and the third gears mesh with the first gears.

Optionally, one side of an energy storage balancing flywheel is connected to a rotating shaft, one end of the rotating shaft is fixedly connected to two fourth gears, the other end of the rotating shaft is rotatably connected to an inner wall of the upper chamber, one end of each of a third transmission shaft and a fourth transmission shaft of the rotating shaft away from third gears is fixedly connected to a fifth gear, and the two fifth gears respectively mesh with the two fourth gears.

Optionally, sides of a third transmission shaft and a fourth transmission shaft are both rotatably connected to one side of a mounting plate by using one-way bearings, and the one-way bearings are capable of converting bidirectional reciprocating kinetic energy into continuous torque outputted in one direction and driving an energy storage balancing flywheel.

Optionally, the mounting structure comprises two horizontal partition plates sequentially located on an inner wall of the housing from top to bottom, opposite sides of the two horizontal partition plates are each penetratingly provided with a through groove for a rack to slide through, an upper surface of the horizontal partition plate at the upper position is fixedly connected to a bearing seat, a rotating shaft is rotatably connected inside the bearing seat, and a vertical partition plate is provided between the two horizontal partition plates.

Optionally, a rack in the transmission mechanism is replaced with a chain, a lower sprocket is arranged at the lower bottom of the lower chamber, a first end point of the chain is downwardly fixedly connected to an upper portion of the inertial kinetic energy body by winding around a liaison fixed on each horizontal partition plate, and a second end point thereof is fixedly connected to a lower portion of the inertial kinetic energy body by winding around the lower sprocket at the bottom, to form a chain closed loop, an upper sprocket located between two first gears is further fixedly connected to a peripheral side of a second transmission shaft, the chain is connected to a lower end of the inertial kinetic energy body, the other end of the chain is fixed to the upper portion of the inertial kinetic energy body by winding around the sprocket on the transmission shaft on the upper end, so that the chain is closed, and the chain mates with the upper sprocket and the lower sprocket.

By adopting the above technical solution, the present invention has the following beneficial effects compared with the prior art. Certainly, any product implementing the present invention does not necessarily need to achieve all of the advantages described below at the same time:

In the present invention, the transmission system and the inertial kinetic energy body are respectively arranged in the upper chamber and the lower chamber by means of a support structure and a suspension system, so that the center of gravity of a wave energy power generation device can be lowered, and the overall center of gravity of motion of the device is always kept at the lowest point. Such a characteristic of a low center of gravity greatly enhances the stability of the device when floating on the sea, and such a split structure simplifies the layout of the transmission system and increases the mounting space for other equipment. In the intense surging of waves, especially under extreme weather conditions such as typhoons and giant swells, the split-type device can effectively reduce the risk of tilting or capsizing caused by wave impacts, thereby ensuring that the device can operate stably for a long time and efficiently capture wave energy.

Specific implementations of the present invention are further described in detail below with reference to the accompanying drawings.

### BRIEF DESCRIPTION OF THE DRAWINGS

The accompanying drawings in the following description are merely some embodiments, and a person of ordinary skill in the art may still derive other accompanying drawings from these accompanying drawings without the exercise of inventive effort. In the drawings:
FIG. 1 is a schematic diagram of an overall rack section structure of a split-type inertial kinetic energy oscillation system;
FIG. 2 is a first schematic structural diagram of a side view of a rack transmission mechanism;
FIG. 3 is a second schematic structural diagram of a side view of the rack transmission mechanism;
FIG. 4 is a schematic diagram of an overall chain section structure of a split-type inertial kinetic energy oscillation system;
FIG. 5 is a first schematic structural diagram of a side view of a chain transmission mechanism; and
FIG. 6 is a second schematic structural diagram of a side view of the chain transmission mechanism.

In the drawings, the reference signs represent the following components:
1. housing, 2. inertial kinetic energy body, 3. suspension support system, 4. transmission mechanism, 5. elastic structure, 6. mounting plate, 7. energy storage balancing flywheel, 8. rack, 9. first transmission shaft, 10. second transmission shaft, 11. third transmission shaft, 12. fourth transmission shaft, 13. first gear, 14. second gear, 15. third gear, 16. rotating shaft, 17. fourth gear, 18. fifth gear, 19. one-way bearing, 20. lower chamber, 21. through groove, 22. upper chamber, 23. mounting structure, 24. horizontal partition plate, 25. bearing seat, 26. vertical partition plate, 27. chain, 28. lower sprocket, and 29. upper sprocket.

It should be noted that these drawings and text descriptions are not intended to limit the scope of the concept of the present invention in any way, but to illustrate the concept of the present invention to those skilled in the art by referring to specific embodiments.

### DETAILED DESCRIPTION OF PREFERRED EMBODIMENTS

The present invention will now be described in further detail with reference to the accompanying drawings.

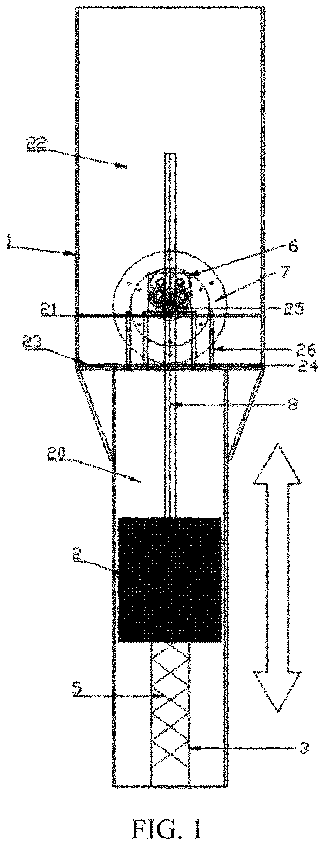

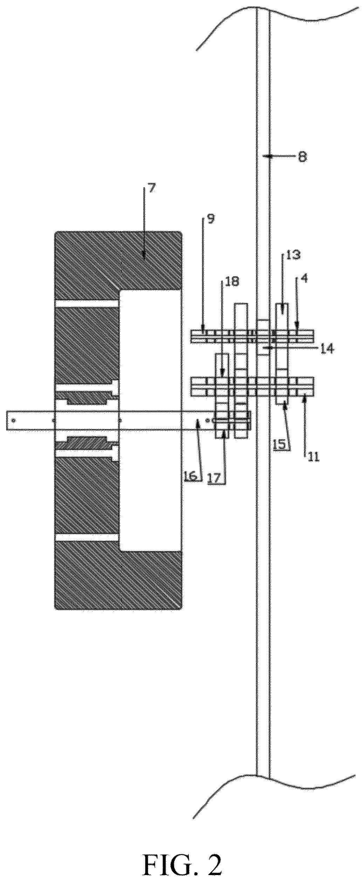

Embodiment 1: Referring to FIG. 1 to FIG. 3, the present embodiment provides a split-type inertial kinetic energy oscillation system, including: a housing 1, where the housing 1 has an upper chamber 22 and a lower chamber 20, and the diameter of the lower chamber 20 is smaller than the diameter of the upper chamber 22;
an inertial kinetic energy body 2, where the inertial kinetic energy body 2 slides in the vertical direction in the lower chamber of the housing 1, and is capable of oscillating up and down driven by pushing by undulations of ocean waves to generate inertial kinetic energy, a suspension support system 3 is provided below the inertial kinetic energy body 2 and is arranged in the lower chamber 20, and the suspension support system 3 is configured to support the oscillating inertial kinetic energy body 2; and
a mounting structure 23, where the mounting structure 23 is located in the upper chamber 22, a transmission mechanism 4 is provided above the mounting structure 23, a transmission portion of the transmission mechanism 4 passes through the mounting structure 23 and enters the lower chamber 20 to be connected to the inertial kinetic energy body 2, and the transmission mechanism 4 is capable of converting bidirectional reciprocating oscillation kinetic energy of the inertial kinetic energy body 2 into continuous torque outputted in one direction.

In the present embodiment, the suspension support system 3 has an elastic structure 5, the elastic structure 5 is in an elastic energy storage state, and an elastic force provided by the elastic structure 5 is used directly or indirectly as a support force for supporting the oscillating suspended body.

In the present embodiment, the transmission mechanism 4 includes a mounting plate 6, an energy storage balancing flywheel 7, a double-sided rack 8, and torque conversion gear sets located above the transmission structure. The torque conversion gear sets are mounted on one side of the mounting plate 6, the energy storage balancing flywheel 7 rotates inside the upper chamber 22, one end of the rack 8 is fixed to the inertial kinetic energy body 2, the double-sided rack 8 respectively meshes with two torque conversion gear sets, and an output end of the torque conversion gear set mates with the energy storage balancing flywheel 7. The double-sided rack 8 has teeth on both sides and meshes with second gears 15.

In the present embodiment, the torque conversion gear sets include a first transmission shaft 9, a second transmission shaft 10, a third transmission shaft 11, and a fourth transmission shaft 12 which are respectively rotatably connected to four corners of the mounting plate 6. Two first gears 13 are fixedly connected to peripheral sides of each of the first transmission shaft 9 and the second transmission shaft 10, a second gear 14 located between the two first gears 13 is further fixedly connected to the peripheral sides of each of the first transmission shaft 9 and the second transmission shaft 10, and the rack 8 is located between the two second gears 14 and meshes with the two second gears 14. Two adjacent first gears 13 mesh with each other, two third gears 15 are rotatably connected to peripheral sides of each of the third transmission shaft 11 and the fourth transmission shaft 12, and the third gears 15 mesh with the first gears 13.

In the present embodiment, one side of the energy storage balancing flywheel 7 is connected to a rotating shaft 16, one end of the rotating shaft 16 is fixedly connected to two fourth gears 17, and the other end of the rotating shaft 16 is rotatably connected to an inner wall of the upper chamber 22. One end of each of the third transmission shaft 11 and the fourth transmission shaft 12 of the rotating shaft 16 away from the third gears 15 is fixedly connected to a fifth gear 18, and the two fifth gears 18 respectively mesh with the two fourth gears 17. The two second gears 18 on the third transmission shaft 11 and the fourth transmission shaft 12 are designed to be staggered.

In the present embodiment, the third transmission shaft 11 and the fourth transmission shaft 12 are both rotatably connected to one side of the mounting plate 6 by using one-way bearings 19, and the one-way bearings 19 are capable of converting the bidirectional reciprocating kinetic energy into the continuous torque outputted in one direction and driving the energy storage balancing flywheel 7.

In the present embodiment, the mounting structure 23 includes two horizontal partition plates 24 sequentially located on an inner wall of the housing 1 from top to bottom. Opposite sides of the two horizontal partition plates 24 are each penetratingly provided with a through groove 21 for the rack 8 to slide through, an upper surface of the horizontal partition plate 24 at the upper position is fixedly connected to a bearing seat 25, the rotating shaft 16 is rotatably connected inside the bearing seat 25, and a vertical partition plate 26 is provided between the two horizontal partition plates 24.

By respectively arranging the inertial kinetic energy body 2, the transmission system, and the support structure in the upper chamber and the lower chamber, the center of gravity of a wave energy power generation device can be lowered, and the overall center of gravity of motion of the device is always kept at the lowest point. Such a characteristic of a low center of gravity greatly enhances the stability of the device when floating on the sea. In the intense surging of waves, especially under extreme weather conditions such as typhoons and giant swells, the device can reduce the risk of tilting or capsizing caused by wave impacts, thereby ensuring that the device can operate stably for a long time and efficiently capture wave energy.

In similar offshore wave energy capture devices, due to a high center of gravity, the devices are susceptible to wave impacts; particularly under the influence of extreme sea conditions such as typhoons or giant swells, the devices may overturn or tilt severely, affecting the normal operation thereof. The split-type design separates the inertial kinetic energy body 2 from other components, lowering the overall center of gravity of the device, and enabling the device to float more stably on the surface of the water. Thus, even in environments with strong winds and giant swells, the device can maintain a low tilt angle, reducing the risk of uneven force distribution, and avoiding overturning or damage caused by intense wave surges.

Furthermore, the low center of gravity design not only enhances the stability of the device, but also significantly optimizes kinetic energy capture efficiency of the device. Kinetic energy of sea waves is converted into oscillating kinetic energy within the system, and is further converted into continuous power output by means of repeated oscillation of the inertial kinetic energy body 2 and the mechanical system. Due to the lowered center of gravity, the extent of bobbing of the device under wave impacts decreases, enabling more precise capturing of kinetic energy in waves, reducing a mismatch between the device and waves, and enhancing kinetic energy conversion efficiency.

When responding to extreme weather or sea conditions, the split-type design further exhibits stronger adaptability. Extreme sea conditions such as typhoons and giant swells usually cause damage or functional failure of conventional devices, since the devices struggle to withstand enormous water pressure and impact forces from different directions. The split-type design system, due to its low center of gravity characteristic, can effectively disperse external pressure, enabling the device to maintain a stable working state when facing powerful waves. Especially under high-wave conditions, the split structure enables various components to move independently of each other without mutual interference. This flexibility effectively reduces the risk of damage caused by excessive force on the entire device.

Furthermore, since the split-type design exhibits excellent independence and modular characteristics, even if an issue with a certain part of the device occurs under extreme weather conditions, the entire system can still continue operating, maintaining high energy output. Such high reliability and maintainability cannot be matched by conventional devices, providing more stable and long-lasting operational assurance for offshore wave energy power generation.

Operating principle: when the inertial kinetic energy body 2 oscillates, vibration of the inertial kinetic energy body 2 is converted by the mechanical system into reciprocating vertical forces. This oscillating movement is linked to the inertial kinetic energy body 2 through the connection of the rack 8, and one end of the rack 8 is fixed to the inertial oscillation body, so that the rack 8 oscillates up and down as the inertial kinetic energy body 2 moves up and down. The up-and-down oscillation of the rack 8 drives two gear sets A and B meshed therewith to rotate. When the rack rises, gear set A generates forward torque and transmits the forward torque to the flywheel. In this case, the one-way bearings in gear set B run idle, and the other gears of gear set B do not rotate. When the rack lowers, gear set B generates forward torque and transmits the forward torque to the flywheel. In this case, the one-way bearings in gear set A run idle and the other gears of gear set A do not rotate. In this way, as the rack moves up and down with the inertial kinetic energy body, kinetic energy of both upward and downward movements of the inertial kinetic energy body is respectively transferred to the flywheel.

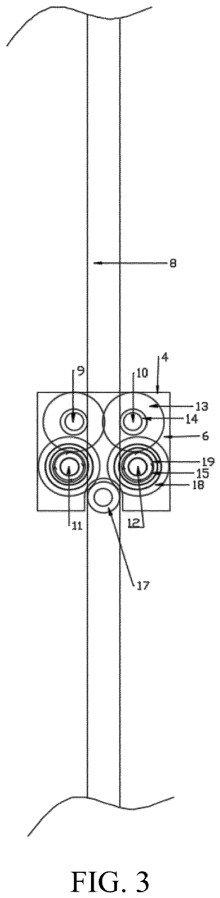

It should be noted that gear set A is all gears on the second transmission shaft 10 and the fourth transmission shaft 12, gear set B is all gears on the first transmission shaft 9 and the third transmission shaft 11, gear set A is the upper and lower transmission shafts on the right side in FIG. 3, and gear set B is the upper and lower transmission shafts on the leftmost side in FIG. 3.

That is, when the double-sided rack 8 moves upward, the rack 8 meshes with the second gear 14 on the peripheral side of the second transmission shaft 10, and then the second gear 14 drives the second transmission shaft 10 to rotate. During rotation of the second transmission shaft 10, the first gears 13 on the peripheral side of the second transmission shaft 10 rotate. Then, the first gears 13 drives the third gears 15 on the peripheral side of the fourth transmission shaft 12 to rotate. Meanwhile, the fourth transmission shaft 12 rotates due to the force transmitted by the third gears 15, and the fifth gear 18 on the peripheral side of the fourth transmission shaft 12 rotates at the same time and drives the rotating shaft 7 to rotate by meshing with the fourth gear 17. During the transmission, the one-way bearings of gear set B run idle, the other gears of gear set B do not rotate, and the same logic applies when the double-sided rack 8 lowers.

For further description: rotation directions of the one-way bearings on the third transmission shaft and the fourth transmission shaft are both clockwise.

These two gear sets are a torque conversion system composed of one-way bearings 19. Each gear set controls the direction of the transmitted torque by means of the one-way selective function of the one-way bearings 19. Specifically, each one-way bearing 19 is used to allow a force in a certain direction to be smoothly transmitted, and filter out a force in another direction. In this way, the bidirectional torque generated when the rack 8 moves up and down is selectively outputted in one direction after being converted by the two gear sets, thereby ensuring that the final power output directions are consistent.

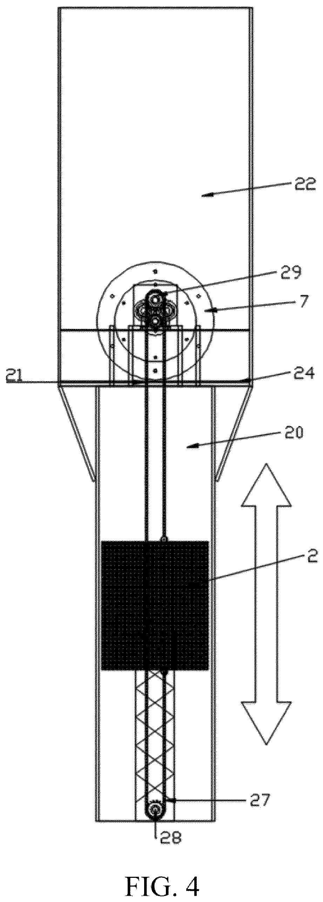

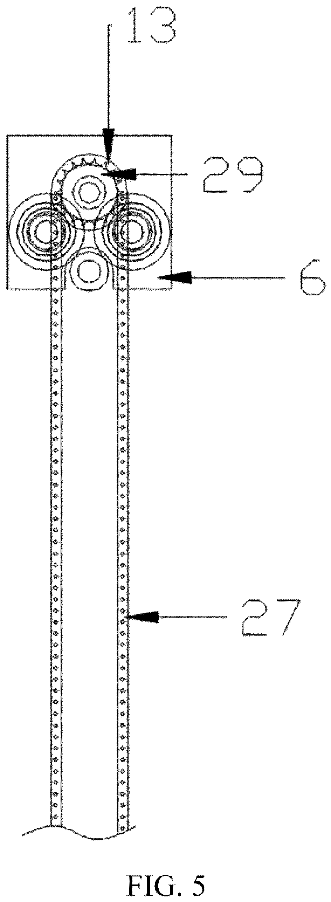

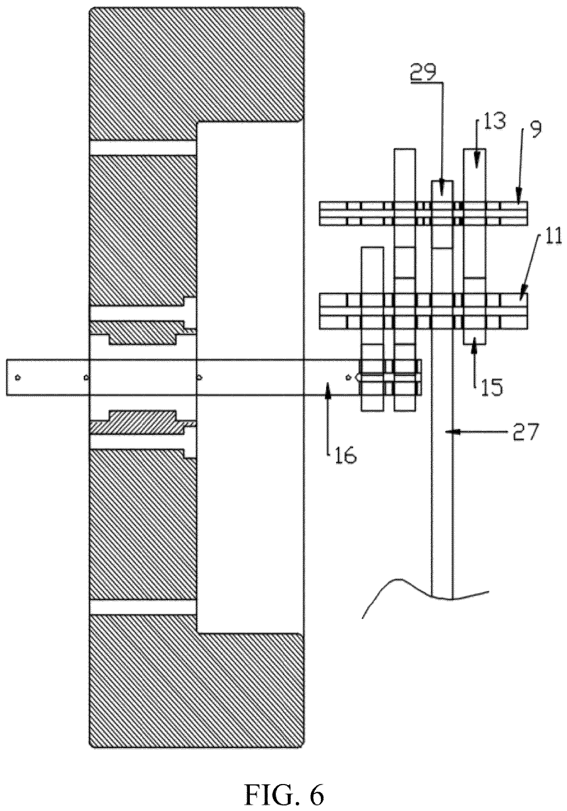

Embodiment 2: Referring to FIG. 4 to FIG. 6, a chain 27 is used to drive the inertial kinetic body 2 to slide up and down in the lower chamber 20, and the structural layout thereof is as follows: the rack in the transmission mechanism is replaced with the chain 27, a lower sprocket 28 is arranged at the lower bottom of the lower chamber, a first end point of the chain 27 is downwardly fixedly connected to an upper portion of the inertial kinetic energy body 2 by winding around a liaison fixed on each horizontal partition plate 24, and a second end point thereof is fixedly connected to a lower portion of the inertial kinetic energy body 2 by winding around the lower sprocket 28 at the bottom, to form a chain closed loop. An upper sprocket 29 located between two first gears 13 is further fixedly connected to the peripheral side of the second transmission shaft 10, the chain 27 is connected to a lower end of the inertial kinetic energy body, the other end of the chain 27 is fixed to the upper portion of the inertial kinetic energy body by winding around the sprocket on the transmission shaft on the upper end, so that the chain 27 is closed, and the chain 27 mates with the upper sprocket 29 and the lower sprocket 28. In the process of Embodiment 2, the second gear 14 needs to be replaced with the upper sprocket 29, and the first transmission shaft 9 needs to be removed. In addition, the first gears 13 on the second transmission shaft mesh with the two third gears 15. In addition, a straight slot is provided between the upper and lower portions of the inertial kinetic body 2 to allow the chain 27 to run therethrough. The other content of the structural design is the same as that of Embodiment 1.

When the inertial kinetic energy body oscillates up and down, the chain 27 is driven by the inertial kinetic energy body to rotate, and drives the upper sprocket to rotate the transmission shaft in forward and reverse directions, which is the same as in Embodiment 1, and finally achieves full-time continuous torque output. By closing the sprockets' runs and fixing the same in place, the vertical oscillatory kinetic energy of the inertial kinetic energy body is transmitted to the transmission mechanism via the rack or chain 27; and the transmission mechanism then converts this bidirectional reciprocating vertical kinetic energy into a unidirectional torque output, driving a generator to rotate.

The present invention is not limited to the above implementations, and any person should know that structural changes made in light of the motivation of the present invention, and any technical solutions that are the same as or similar to the present invention, all fall within the scope of protection of the present invention. The techniques, shapes, and configurations that are not described in detail in the present invention are all known techniques.

## Claims

1. A split-type inertial kinetic energy oscillation system, **characterized by** comprising:
a housing (1), wherein the housing (1) has an upper chamber (22) and a lower chamber (20), and the diameter of the lower chamber (20) is smaller than the diameter of the upper chamber (22);
an inertial kinetic energy body (2), wherein the inertial kinetic energy body (2) slides in the vertical direction in the lower chamber of the housing (1), and is capable of oscillating up and down driven by pushing by undulations of ocean waves to generate inertial kinetic energy, a suspension support system (3) is provided below the inertial kinetic energy body (2) and is arranged in the lower chamber (20), and the suspension support system (3) is configured to support the oscillating inertial kinetic energy body (2); and
a mounting structure (23), wherein the mounting structure (23) is located in the upper chamber (22), a transmission mechanism (4) is provided above the mounting structure (23), a transmission portion of the transmission mechanism (4) passes through the mounting structure (23) and enters the lower chamber (20) to be connected to the inertial kinetic energy body (2), and the transmission mechanism (4) is capable of converting bidirectional reciprocating oscillation kinetic energy of the inertial kinetic energy body (2) into continuous torque outputted in one direction.

2. The split-type inertial kinetic energy oscillation system according to claim 1, wherein the suspension support system (3) has an elastic structure (5), the elastic structure (5) is in an elastic energy storage state, and an elastic force provided by the elastic structure (5) is used directly or indirectly as a support force for supporting the oscillating suspended body.

3. The split-type inertial kinetic energy oscillation system according to claim 1, wherein the transmission mechanism (4) comprises a mounting plate (6), an energy storage balancing flywheel (7), a double-sided rack (8), and torque conversion gear sets located above the transmission structure, the torque conversion gear sets are mounted on one side of the mounting plate (6), the energy storage balancing flywheel (7) rotates inside the upper chamber (22), one end of the rack (8) is fixed to the inertial kinetic energy body (2), the double-sided rack (8) respectively meshes with two torque conversion gear sets, and an output end of the torque conversion gear set mates with the energy storage balancing flywheel (7).

4. The split-type inertial kinetic energy oscillation system according to claim 1, wherein torque conversion gear sets comprise a first transmission shaft (9), a second transmission shaft (10), a third transmission shaft (11), and a fourth transmission shaft (12) that are respectively rotatably connected to four corners of a mounting plate (6), two first gears (13) are fixedly connected to peripheral sides of each of the first transmission shaft (9) and the second transmission shaft (10), a second gear (14) located between the two first gears (13) is further fixedly connected to the peripheral sides of each of the first transmission shaft (9) and the second transmission shaft (10), a rack (8) is located between the two second gears (14) and meshes with the two second gears (14), two adjacent first gears (13) mesh with each other, two third gears (15) are rotatably connected to peripheral sides of each of the third transmission shaft (11) and the fourth transmission shaft (12), and the third gears (15) mesh with the first gears (13).

5. The split-type inertial kinetic energy oscillation system according to claim 1, wherein one side of an energy storage balancing flywheel (7) is connected to a rotating shaft (16), one end of the rotating shaft (16) is fixedly connected to two fourth gears (17), the other end of the rotating shaft (16) is rotatably connected to an inner wall of the upper chamber (22), one end of each of a third transmission shaft (11) and a fourth transmission shaft (12) of the rotating shaft (16) away from third gears (15) is fixedly connected to a fifth gear (18), and the two fifth gears (18) respectively mesh with the two fourth gears (17).

6. The split-type inertial kinetic energy oscillation system according to claim 1, wherein sides of a third transmission shaft (11) and a fourth transmission shaft (12) are both rotatably connected to one side of a mounting plate (6) by using one-way bearings (19), and the one-way bearings (19) are capable of converting bidirectional reciprocating kinetic energy into continuous torque outputted in one direction and driving an energy storage balancing flywheel (7).

7. The split-type inertial kinetic energy oscillation system according to claim 1, wherein the mounting structure (23) comprises two horizontal partition plates (24) sequentially located on an inner wall of the housing (1) from top to bottom, opposite sides of the two horizontal partition plates (24) are each penetratingly provided with a through groove (21) for a rack (8) to slide through, an upper surface of the horizontal partition plate (24) at the upper position is fixedly connected to a bearing seat (25), a rotating shaft (16) is rotatably connected inside the bearing seat (25), and a vertical partition plate (26) is provided between the two horizontal partition plates (24).

8. The split-type inertial kinetic energy oscillation system according to claim 1, wherein a rack in the transmission mechanism is replaced with a chain (27), a lower sprocket (28) is arranged at the lower bottom of the lower chamber, a first end point of the chain (27) is downwardly fixedly connected to an upper portion of the inertial kinetic energy body (2) by winding around a liaison fixed on each horizontal partition plate (24), and a second end point thereof is fixedly connected to a lower portion of the inertial kinetic energy body (2) by winding around the lower sprocket (28) at the bottom, to form a chain closed loop, an upper sprocket (29) located between two first gears (13) is further fixedly connected to a peripheral side of a second transmission shaft (10), the chain (27) is connected to a lower end of the inertial kinetic energy body, the other end of the chain (27) is fixed to the upper portion of the inertial kinetic energy body by winding around the sprocket on the transmission shaft on the upper end, so that the chain (27) is closed, and the chain (27) mates with the upper sprocket (29) and the lower sprocket (28).

## Amended claims

### Amended claims in accordance with Rule 137(2) EPC.

1. A split-type inertial kinetic energy oscillation system, **characterized by** comprising:
a housing (1), wherein the housing (1) has an upper chamber (22) and a lower chamber (20), and the diameter of the lower chamber (20) is smaller than the diameter of the upper chamber (22);
an inertial kinetic energy body (2), wherein the inertial kinetic energy body (2) slides in the vertical direction in the lower chamber of the housing (1), and is capable of oscillating up and down driven by pushing by undulations of ocean waves to generate inertial kinetic energy, a suspension support system (3) is provided below the inertial kinetic energy body (2) and is arranged in the lower chamber (20), and the suspension support system (3) is configured to support the oscillating inertial kinetic energy body (2); and
a mounting structure (23), wherein the mounting structure (23) is located in the upper chamber (22), a transmission mechanism (4) is provided above the mounting structure (23), a transmission portion of the transmission mechanism (4) passes through the mounting structure (23) and enters the lower chamber (20) to be connected to the inertial kinetic energy body (2), and the transmission mechanism (4) is capable of converting bidirectional reciprocating oscillation kinetic energy of the inertial kinetic energy body (2) into continuous torque outputted in one direction.

2. The split-type inertial kinetic energy oscillation system according to claim 1, wherein the suspension support system (3) has an elastic structure (5), the elastic structure (5) is in an elastic energy storage state, and an elastic force provided by the elastic structure (5) is used directly or indirectly as a support force for supporting the oscillating suspended inertial kinetic energy body (2).

3. The split-type inertial kinetic energy oscillation system according to claim **1,** wherein the transmission mechanism (4) comprises a mounting plate (6), an energy storage balancing flywheel (7), a double-sided rack (8), and torque conversion gear sets located above the transmission structure, the torque conversion gear sets are mounted on one side of the mounting plate (6), the energy storage balancing flywheel (7) rotates inside the upper chamber (22), one end of the rack (8) is fixed to the inertial kinetic energy body (2), the double-sided rack (8) respectively meshes with two torque conversion gear sets, and an output end of the torque conversion gear set mates with the energy storage balancing flywheel (7).

4. The split-type inertial kinetic energy oscillation system according to claim 1, wherein torque conversion gear sets comprise a first transmission shaft (9), a second transmission shaft (10), a third transmission shaft (11), and a fourth transmission shaft (12) that are respectively rotatably connected to four corners of a mounting plate (6), two first gears (13) are fixedly connected to peripheral sides of each of the first transmission shaft (9) and the second transmission shaft (10), a second gear (14) located between the two first gears (13) is further fixedly connected to the peripheral sides of each of the first transmission shaft (9) and the second transmission shaft (10), a rack (8) is located between the two second gears (14) and meshes with the two second gears (14), two adjacent first gears (13) mesh with each other, two third gears (15) are rotatably connected to peripheral sides of each of the third transmission shaft (11) and the fourth transmission shaft (12), and the third gears (15) mesh with the first gears (13).

5. The split-type inertial kinetic energy oscillation system according to claim 1, wherein one side of an energy storage balancing flywheel (7) is connected to a rotating shaft (16), one end of the rotating shaft (16) is fixedly connected to two fourth gears (17), the other end of the rotating shaft (16) is rotatably connected to an inner wall of the upper chamber (22), one end of each of a third transmission shaft (11) and a fourth transmission shaft (12) of the rotating shaft (16) away from third gears (15) is fixedly connected to a fifth gear (18), and the two fifth gears (18) respectively mesh with the two fourth gears (17).

6. The split-type inertial kinetic energy oscillation system according to claim 1, wherein sides of a third transmission shaft (11) and a fourth transmission shaft (12) are both rotatably connected to one side of a mounting plate (6) by using one-way bearings (19), and the one-way bearings (19) are capable of converting bidirectional reciprocating kinetic energy into continuous torque outputted in one direction and driving an energy storage balancing flywheel (7).

7. The split-type inertial kinetic energy oscillation system according to claim 1, wherein the mounting structure (23) comprises two horizontal partition plates (24) sequentially located on an inner wall of the housing (1) from top to bottom, opposite sides of the two horizontal partition plates (24) are each penetratingly provided with a through groove (21) for a rack (8) to slide through, an upper surface of the horizontal partition plate (24) at the upper position is fixedly connected to a bearing seat (25), a rotating shaft (16) is rotatably connected inside the bearing seat (25), and a vertical partition plate (26) is provided between the two horizontal partition plates (24).

8. The split-type inertial kinetic energy oscillation system according to claim 1, comprising a chain (27) in the transmission mechanism, a lower sprocket (28) is arranged at the lower bottom of the lower chamber, a first end point of the chain (27) is downwardly fixedly connected to an upper portion of the inertial kinetic energy body (2) by winding around a liaison fixed on each horizontal partition plate (24), and a second end point thereof is fixedly connected to a lower portion of the inertial kinetic energy body (2) by winding around the lower sprocket (28) at the bottom, to form a chain closed loop, an upper sprocket (29) located between two first gears (13) is further fixedly connected to a peripheral side of a second transmission shaft (10), the chain (27) is connected to a lower end of the inertial kinetic energy body, the other end of the chain (27) is fixed to the upper portion of the inertial kinetic energy body by winding around the sprocket on the transmission shaft on the upper end, so that the chain (27) is closed, and the chain (27) mates with the upper sprocket (29) and the lower sprocket (28).
